(19) Europäisches Patentamt / European Patent Office / Office européen des brevets

(11) **EP 2 689 369 B1**

## (12) FASCICULE DE BREVET EUROPEEN

(45) Date de publication et mention
de la délivrance du brevet:
**09.07.2014 Bulletin 2014/28**

(21) Numéro de dépôt: **12705317.1**

(22) Date de dépôt: **10.01.2012**

(51) Int Cl.:
*G06F 21/55* (2013.01)   *G06F 21/75* (2013.01)
*G06F 12/02* (2006.01)   *H04L 29/06* (2006.01)

(86) Numéro de dépôt international:
**PCT/FR2012/050069**

(87) Numéro de publication internationale:
**WO 2012/127138 (27.09.2012 Gazette 2012/39)**

(54) **PROCEDE DE MASQUAGE DE PASSAGE EN FIN DE VIE D'UN DISPOSITIF ELECTRONIQUE ET DISPOSITIF COMPORTANT UN MODULE DE CONTROLE CORRESPONDANT**

VERFAHREN ZUR VERBERGUNG DES END-OF-LIFE-ÜBERGANGS EINER ELEKTRONISCHEN VORRICHTUNG UND VORRICHTUNG MIT EINEM ENTSPRECHENDEN STEUERMODUL

METHOD FOR MASKING THE END-OF-LIFE TRANSITION OF AN ELECTRONIC DEVICE AND DEVICE COMPRISING A CORRESPONDING CONTROL MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.03.2011 FR 1152313**

(43) Date de publication de la demande:
**29.01.2014 Bulletin 2014/05**

(73) Titulaire: **Morpho**
**92130 Issy-les-Moulineaux (FR)**

(72) Inventeurs:
• **BERTHIER, Mael**
**F-75015 Paris (FR)**
• **BARTHE, Michael**
**F-75015 Paris (FR)**

(74) Mandataire: **Cabinet Plasseraud**
**52, rue de la Victoire**
**75440 Paris Cedex 09 (FR)**

(56) Documents cités:
**FR-A1- 2 776 410    FR-A1- 2 784 763
FR-A1- 2 924 262**

**Description**

L'invention concerne un procédé de masquage de passage en fin de vie d'un dispositif électronique, comprenant un port d'entrée-sortie, un microprocesseur, une mémoire vive, une mémoire morte et une mémoire non volatile reprogrammable contenant une variable d'état de fin de vie du dispositif électronique gérée par un module de contrôle.

De tels dispositifs électroniques correspondent, de manière non exclusive, aux cartes électroniques, ou à tout dispositif électronique comportant au moins ou entrant en relation avec, une carte électronique, telle que, notamment, une carte à microprocesseur, pour laquelle une bonne résistance sécuritaire est requise, vis-à-vis de toute intrusion externe.

Pour assurer une bonne résistance sécuritaire des cartes précitées, un mécanisme de passage en fin de vie est activé, sur détection d'un certain nombre d'erreurs critiques.

Le processus de passage en fin de vie de ce type de dispositif, notamment en ce qui concerne les cartes à microprocesseur, apparaît cependant problématique, car un tel processus s'appuie conventionnellement sur un processus d'écriture en mémoire reprogrammable non volatile, généralement mémoire EEPROM, ce processus d'écriture ayant pour objet la modification des données et le blocage des applications.

Un tel processus apparaît toutefois vulnérable, car il est détectable en dehors de la carte, en raison notamment du fort appel de courant engendré par le processus d'écriture en mémoire reprogrammable.

Un tiers indélicat dispose donc de tout loisir d'empêcher l'exécution d'un tel processus, en coupant l'alimentation électrique du dispositif ou de la carte.

Pour améliorer cette situation, il a été proposé dans FR 07 08242 et PCT/FR2008/052106, de rendre le processus de passage en fin de vie d'un tel dispositif électronique totalement certain dans un délai aléatoire après l'évènement, erreur critique, à l'origine du déclenchement de passage en fin de vie, en masquant, notamment à tout tiers, l'opération d'écriture en mémoire non volatile correspondant au passage en fin de vie, ce qui interdit en pratique toute attaque par canal caché.

Selon ce technique, le masquage de toute écriture d'une variable d'état de passage en fin de vie en mémoire non volatile d'un dispositif électronique est obtenu par dilution de cette opération d'écriture dans le déroulement normal du programme d'application exécuté par le dispositif électronique.

En pratique, l'opération d'écriture d'une variable en mémoire non volatile est toujours constituée de deux phases successives : une phase d'effacement, qui conduit la variable à prendre une valeur vide (par "valeur vide", on entend une valeur par défaut prédéfinie et sur laquelle un utilisateur de la mémoire non volatile n'a pas d'influence, telle que "00", "FF" ou autre), puis une phase d'écriture proprement dite, au cours de laquelle une valeur non vide (c'est-à-dire une valeur distincte de la valeur vide) est affectée à la variable dans l'espace qui lui est dédié au sein de la mémoire non volatile. L'écriture d'une variable d'état de passage en fin de vie en mémoire non volatile d'un dispositif électronique, telle que prévue dans l'art antérieur mentionné ci-dessus, n'échappe pas à cette règle.

Or chacune des phases d'effacement et d'écriture constituant l'opération d'écriture d'une variable en mémoire non volatile nécessite un certain temps de traitement et engendre une certaine consommation électrique, à peu près similaires dans les deux cas.

Au vu de cette technique antérieure, un objet de la présente invention est d'en améliorer les performances, tout en en maintenant le niveau de sécurité apporté par le masquage du passage en fin de vie.

A cet effet, l'invention propose un procédé de masquage de passage en fin de vie d'un dispositif électronique comprenant un microprocesseur, une mémoire vive, une mémoire morte, une mémoire non volatile reprogrammable contenant une variable d'état de fin de vie du dispositif électronique gérée par un module de contrôle et un port d'entrée/sortie. Ce procédé comprend les étapes suivantes:

- charger en mémoire vive, à partir de ladite mémoire non volatile, la valeur de ladite variable d'état de fin de vie ; et, préalablement à l'exécution de toute commande courante par ledit microprocesseur:
- vérifier la valeur de ladite variable d'état de fin de vie mémorisée en mémoire vive ; et, en cas de valeur vide (c'est-à-dire une valeur par défaut prédéfinie pour la mémoire non volatile): exécuter les opérations de passage en fin de vie du dispositif électronique ; sinon, ladite variable d'état de fin de vie mémorisée en mémoire vive ayant une valeur non vide (c'est-à-dire une valeur distincte de la valeur vide) :
- poursuivre l'initialisation et/ou l'exécution de la commande courante par le microprocesseur du dispositif électronique ; et, sur détection d'une attaque intrusive :
- procéder à une écriture, dans la seule mémoire vive, de ladite variable d'état de fin de vie du dispositif électronique et poursuivre l'initialisation et/ou l'exécution de la commande courante ; et
- procéder à un effacement seul de la variable d'état de fin de vie dans ladite mémoire non volatile de manière différée pour l'effectuer en lieu et place d'une prochaine opération de mise à jour (effacement et/ou écriture) en mémoire non volatile.

Le fait de différer la mise à jour de la variable d'état de fin de vie dans ladite mémoire non volatile permet un masquage efficace du passage en fin de vie du dispositif électronique, puisqu'un tiers indélicat n'est pas capable de distinguer l'appel de courant engendré par cette mise à jour de la variable d'état de fin de vie de celui engendré par l'exécution normale d'une commande exécutée par le microprocesseur du dispositif électronique. Un niveau de sécurité du même ordre que dans FR 07 08242 et PCT/FR2008/052106 est ainsi obtenu.

De plus, le fait de procéder à un "effacement seul", c'est-à-dire à une phase d'effacement non suivie d'une phase d'écriture, de la variable d'état de fin de vie dans ladite mémoire non volatile permet de limiter le temps de traitement et la consommation électrique nécessaires, e.g. d'un facteur 2 environ. Les performances lors de l'exécution d'un programme d'application par le dispositif électronique en sont ainsi largement améliorées.

Selon des modes de réalisation avantageux qui peuvent être combinés de toutes les manières envisageables, le procédé peut en outre présenter tout ou partie des caractéristiques ci-après.

Pour un ensemble de commandes exécutées par le microprocesseur du dispositif électronique incluant des commandes comprenant une opération systématique en mémoire non volatile et des commandes ne comprenant pas d'opération en mémoire non volatile, le procédé peut comprendre en outre, indépendamment de la détection ou de la non détection d'une attaque intrusive, à exécuter un effacement seul en mémoire non volatile d'une variable factice. Ceci permet de masquer davantage encore l'effacement de la variable d'état de fin de vie du dispositif électronique en mémoire non volatile, en introduisant des effacements "leurres" avec une signature électrique similaire. Un tiers indélicat peut ainsi encore plus difficilement identifier l'effacement de la variable d'état de fin de vie, à partir du seul appel de courant qu'il génère.

L'effacement seul en mémoire non volatile de la variable factice peut être exécuté dans une même page mémoire que celui de la variable d'état de fin de vie.

L'effacement seul en mémoire non volatile de la variable factice peut être exécuté préalablement à toute exécution d'opération de transmission de données sur la ligne du port d'entrée/sortie du dispositif électronique.

Consécutivement à tout effacement seul en mémoire non volatile de la variable d'état de fin de vie, une étape consistant à vérifier à la valeur vide la valeur de la variable d'état de fin de vie, et, sur vérification à cette valeur vide, une étape d'exécution des opérations de passage en fin de vie du dispositif électronique.

Sur vérification de la valeur de cette variable d'état de fin de vie à la valeur vide, audit effacement seul en mémoire non volatile de la variable factice peut être substitué un effacement seul en mémoire non volatile de la valeur de la variable d'état de fin de vie.

Sur détection d'une erreur d'exécution temporaire d'une instruction distincte d'une attaque intrusive ne justifiant pas d'un passage en fin de vie du dispositif électronique, ledit procédé peut inclure en outre :

la mise à jour par incrémentation d'un compteur d'erreur en mémoire vive ;
la comparaison de la valeur de comptage d'erreur à une valeur de seuil ; et, sur dépassement de ladite valeur de seuil par ladite valeur de comptage d'erreur :

l'écriture dans la mémoire vive de la valeur de ladite variable d'état de fin de vie du dispositif électronique et le passage en fin de vie du dispositif électronique.

L'invention propose aussi un dispositif électronique comprenant un microprocesseur, une mémoire vive, une mémoire morte, une mémoire non volatile reprogrammable contenant une variable d'état de fin de vie du dispositif électronique gérée par un module de contrôle et un port d'entrée/sortie (I/O). Le module de contrôle inclut un module de programme d'ordinateur d'exécution des étapes du procédé objet de l'invention précédemment citées.

L'invention propose encore un produit de programme d'ordinateur mémorisé sur un support de mémorisation et incluant une suite d'instructions exécutables par un ordinateur ou par le microprocesseur d'un dispositif électronique. Lors de l'exécution desdites instructions, ledit programme exécute les étapes du procédé susmentionné.

Le procédé de masquage de passage en fin de vie d'un dispositif électronique et le dispositif électronique incluant un module de contrôle correspondant, objets de l'invention, trouvent application à tout type de dispositif électronique, mais, de manière préférentielle non limitative, à des dispositifs électroniques tels que les cartes à microprocesseur traitant et/ou stockant des données personnelles, privées ou secrètes.

Ils seront mieux compris à la lecture de la description et à l'observation des figures ci-après, dans lesquelles :

- la figure la représente, à titre purement illustratif, un organigramme d'étapes de mise en oeuvre du procédé selon un mode de réalisation de l'invention ;
- La figure 1b représente, à titre purement illustratif un chronogramme d' étapes exécutées au cours de la mise en oeuvre du procédé illustré en figure 1a ;
- Les figures 1c à 1f représentent, à titre purement illustratif, des détails avantageux de mise en oeuvre des étapes de procédé illustré en figure 1a ;

- La figure 2 représente, à titre purement illustratif, sous forme de schéma fonctionnel, l'architecture d'un dispositif électronique muni d'un module de contrôle de passage en fin de vie conforme à un mode de réalisation de la présente invention.

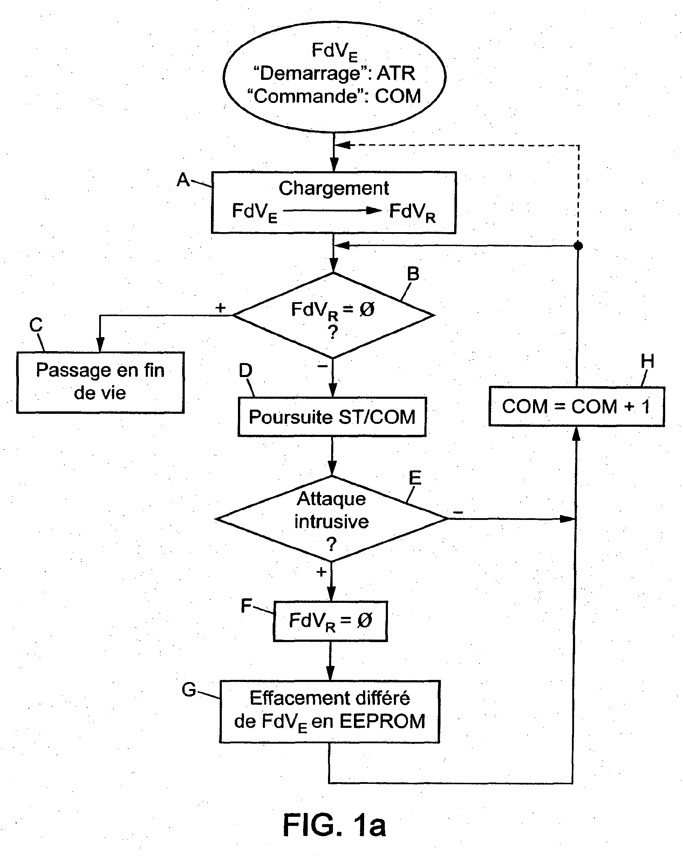

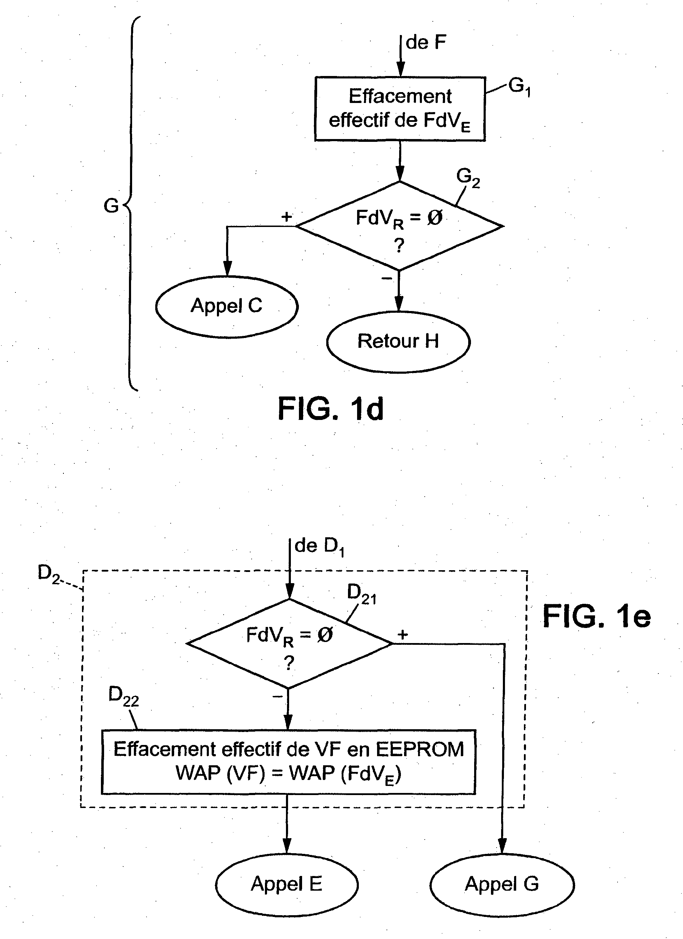

Une description plus détaillée du procédé de masquage de passage en fin de vie d'un dispositif électronique, selon un mode de réalisation de la présente invention, sera maintenant donnée en liaison avec les figures 1a à 1f. D'une manière générale, on indique que le procédé de masquage de passage en fin de vie d'une carte électronique, objet de la présente invention, s'applique à tout dispositif électronique comprenant un microprocesseur, une mémoire vive, une mémoire morte et une mémoire non volatile reprogrammable contenant une variable d'état de fin de vie du dispositif électronique, gérée par un module de contrôle. De manière plus particulière, le dispositif électronique peut comporter également un port d'entrée/sortie permettant l'échange de données soit avec un appareil hôte ou même en réseau, par exemple. La notion de mémoire non volatile reprogrammable couvre les mémoires reprogrammables électriquement, mémoires EEPROM, les mémoires flash, par exemple.

L'appareil électronique précité, lors de son fonctionnement, exécute une phase de démarrage, notée ATR (<u>A</u>nswer <u>T</u>o <u>R</u>eset en anglais), puis des commandes courantes successives, notées COM.

On comprend, en particulier, que le dispositif électronique correspondant peut avantageusement être constitué par toute carte à microprocesseur, par exemple.

En référence à la figure 1a, le procédé de masquage de passage en fin de vie d'un dispositif électronique comprend une étape A consistant à charger en mémoire vive du dispositif électronique, à partir de la mémoire non volatile de ce dernier, la valeur notée $FdV_E$ de la variable de fin de vie mémorisée en mémoire non volatile.

L'opération correspondante à l'étape A est notée :

$$FdV_E \longrightarrow FdV_R.$$

Dans la relation précédente, $FdV_R$ désigne la valeur de la variable d'état de fin de vie du dispositif électronique chargée en mémoire vive.

On notera que, dans le cas particulier où la variable de fin de vie $FdV_E$ mémorisée en mémoire non volatile aurait une valeur vide, c'est-à-dire une valeur par défaut prédéfinie, par exemple suite à un effacement seul d'une valeur précédemment stockée pour cette variable, la variable d'état de fin de vie $FdV_R$ du dispositif électronique chargée en mémoire vive aura avantageusement la même valeur vide. En variante, une valeur donnée non vide, c'est-à-dire distincte de la valeur vide, pourrait être affectée à la variable $FdV_R$ lorsque la variable $FdV_E$ a une valeur vide. Cette valeur donnée peut par exemple être la valeur "vraie" (ou "OK") ou toute autre valeur déterminée. Dans ce dernier cas, le chargement en mémoire vive de la valeur de la variable d'état de fin de vie mémorisée en mémoire non volatile s'accompagne ainsi d'un changement de valeur (ou d'une affectation de valeur pour passer d'une valeur vide à une valeur donnée non vide).

Suite à l'étape A de la figure 1a, et préalablement à l'exécution de toute commande courante COM par le microprocesseur, le procédé consiste ensuite, en une étape B, à vérifier la valeur de la variable d'état de fin de vie mémorisée en mémoire vive. Cette vérification peut par exemple consister à vérifier l'existence d'une valeur pour $FdV_R$, c'est-à-dire à vérifier si $FdV_R$ a ou non la valeur vide. Dans le cas mentionné précédemment où $FdV_R$ prendrait une valeur donnée non vide lorsque $FdV_E$ a une valeur vide, par exemple la valeur "vraie" (ou "OK"), ladite vérification pourrait consister à comparer la valeur de $FdV_R$ à cette valeur donnée non vide, ou au contraire à une valeur distincte de cette valeur donnée non vide. À l'étape B de l'exemple non limitatif illustré sur la figure 1a, la vérification est représentée par une étape de test :

$$FdV_R = \varnothing \ ?$$

Dans cette relation, $\varnothing$ représente la valeur vide, telle que définie plus haut, de la variable d'état de fin de vie du dispositif électronique mémorisée en mémoire vive.

Sur réponse positive au test de l'étape B, le procédé consiste à exécuter C les opérations de passage en fin de vie du dispositif électronique.

Au contraire sur réponse négative au test exécuté à l'étape B, la variable d'état de fin de vie mémorisée en mémoire vive FdVR ayant une valeur non vide, le procédé consiste à poursuivre l'initialisation et/ou l'exécution de la commande courante COM par le microprocesseur du dispositif électronique. On indique que l'exécution de la commande courante correspond à toute commande d'une application exécutée par le dispositif électronique.

Au cours de cette exécution et sur détection, à une étape E, d'une attaque intrusive, le procédé consiste, en une étape F, à procéder à une écriture dans la seule mémoire vive de la variable d'état de fin de vie du dispositif électronique, la variable $FdV_R$, et à poursuivre l'initialisation et/ou l'exécution de la commande courante COM. L'écriture de la variable $FdV_R$ conduit cette dernière à prendre la valeur vide définie plus haut (c'est-à-dire la valeur par défaut prédéfinie pour la mémoire non volatile), ou bien une valeur donnée non vide telle que la valeur "vraie" (ou "OK").

A l'étape F de l'exemple non limitatif illustré sur la figure 1a, l'opération d'écriture est notée par la relation :

$$FdV_R = \emptyset.$$

Dans la relation précédente, on indique que la valeur 0 désigne la valeur vide définie plus haut.

Enfin l'étape F précitée d'écriture en mémoire vive est suivie d'une étape G consistant à procéder à un effacement seul de la variable d'état de fin de vie $FdV_E$ dans la mémoire non volatile de manière différée pour l'effectuer en lieu et place d'une prochaine opération de mise à jour (effacement et/ou écriture) en mémoire non volatile. Ceci permet de masquer la modification opérée sur la variable d'état de fin de vie. On empêche ainsi un tiers indélicat de distinguer cette opération, clairement et à temps, d'une opération de mise à jour normale réalisée en mémoire non volatile, par exemple dans le cadre d'une commande classique.

Par "effacement seul", on entend une phase d'effacement de la valeur stockée pour la variable $FdV_E$ considérée, qui conduit ladite variable à prendre la valeur vide telle que définie plus haut, cette phase d'effacement n'étant pas suivie par une phase d'écriture au cours de laquelle une valeur non vide, c'est-à-dire distincte de la valeur vide, serait affectée à ladite variable dans l'espace qui lui est dédié au sein de la mémoire non volatile. Autrement dit, à l'issue d'un effacement seul de la variable $FdV_E$, cette dernière est stockée en mémoire non volatile avec la valeur vide. Une telle valeur vide se distingue donc d'une valeur non vide, même particulière, en ce qu'elle ne nécessite aucune phase d'écriture.

Du fait de la mise en oeuvre d'un effacement seul de la variable d'état de fin de vie $FdV_E$, le temps de traitement et la consommation électrique engendrée par cet effacement sont réduits par rapport à une situation où la variable d'état de fin de vie $FdV_E$ ferait l'objet d'une écriture en mémoire non volatile. En effet, on économise le temps de traitement et la consommation électrique qui seraient associés à une phase d'écriture. A titre illustratif, cette économie peut être estimée à une réduction du temps de traitement et de la consommation électrique d'un facteur 2 environ par rapport à la situation décrite dans FR 07 08242 et PCT/FR2008/052106.

L'étape G précitée est par exemple suivie d'un retour à l'exécution de la commande courante suivante par l'intermédiaire de l'étape H. À l'étape précitée, COM+1 désigne la commande suivante.

Ainsi que représenté sur la figure 1a, le retour est effectué à l'étape B pour la simple exécution de la commande suivante.

Toutefois, selon une autre possibilité de mise en oeuvre du procédé, le retour peut être effectué, ainsi que représenté en pointillé sur la figure 1a, en amont du chargement exécuté à l'étape A, pour renouvellement du processus de chargement en mémoire vive de la valeur de la variable d'état de fin de vie $FdV_E$ de manière systématique. Un tel processus n'est toutefois pas indispensable mais peut être mis en oeuvre en variante.

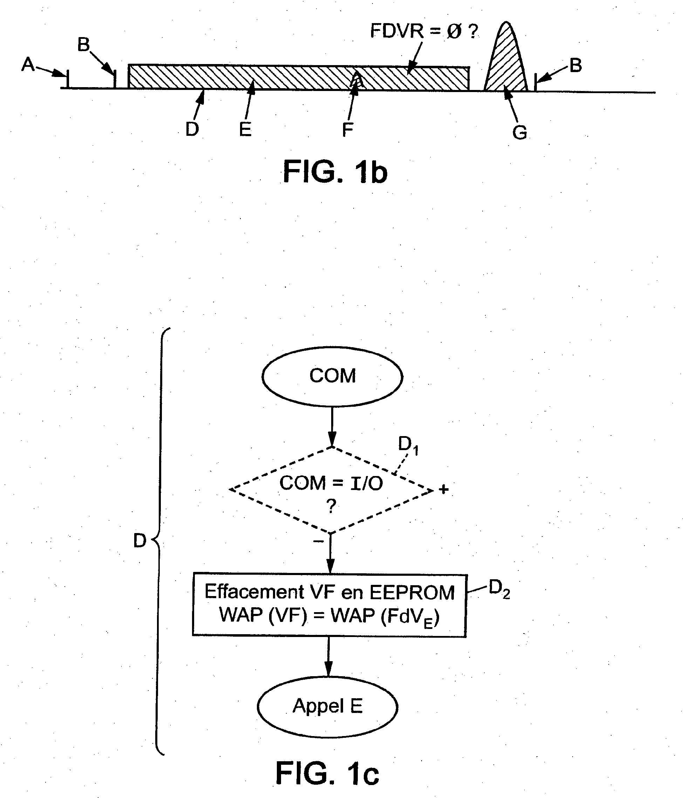

Sur la figure 1b, on a représenté un chronogramme des opérations d'exécution des étapes de la figure 1a.

En particulier, l'étape A peut être exécutée au démarrage ATR ou préalablement à l'exécution de chaque commande COM, ainsi que mentionné précédemment.

Le test de l'étape B est exécuté préalablement à la poursuite du démarrage ou de l'exécution de la commande courante représentée en hachures à gauche sur la figure 1a. On rappelle que la réponse positive au test de l'étape B amène automatiquement le passage en fin de vie du dispositif électronique à l'étape C.

La poursuite du démarrage ou de l'initialisation ou encore de l'exécution de la commande courante à l'étape D correspond en fait à la mise en oeuvre de processus algorithmiques manipulant des secrets pour le dispositif électronique, lorsque ce dernier est constitué par une carte à microprocesseur par exemple.

Le test de l'étape E correspondant à un test de détection d'attaque intrusive peut être mis en oeuvre de manière classique soit par l'exécution de mécanismes anti-DFA (Differential Fault Analysis en anglais, procédé d'attaque consistant à introduire une erreur dans un traitement pour en déduire des informations sur les données traitées) soit par des processus de vérification de l'intégrité des données par exemple.

L'étape d'écriture, dans la seule mémoire vive, de la variable d'état de fin de vie du dispositif électronique, étape F, est exécutée par le module de contrôle du passage en fin de vie du dispositif électronique et opère par écriture de cette variable d'état selon la relation précédemment mentionnée :

$$FdV_R = \emptyset.$$

L'étape G consistant en l'effacement seul de la variable d'état de fin de vie $FdV_E$ en mémoire non volatile, c'est-à-dire le plus souvent en mémoire EEPROM, est alors exécutée de manière différée, c'est-à-dire en lieu et place d'une prochaine mise à jour (effacement et/ou écriture) à effectuer dans la commande courante ou dans une commande ultérieure.

Sur la figure 1b, cette opération est représentée par un pic en hachures à droite illustrant l'augmentation de l'intensité de courant consommé par la mémoire précitée en raison de l'opération d'effacement seul dans la mémoire précitée.

L'étape E est alors suivie d'une étape de retour soit à l'étape B, soit à l'étape A, ainsi que décrit précédemment en liaison avec la figure 1a.

Ainsi qu'on l'a en outre représenté en figure 1c, on considère tout ensemble de commandes exécutées par le microprocesseur du dispositif électronique incluant des commandes ($COM_W$) comprenant une opération systématique en mémoire non volatile et des commandes ($COM_{\overline{W}}$) ne comprenant pas d'opération en mémoire non volatile. Dans cette hypothèse, le procédé comprend en outre, indépendamment de la détection ou de la non détection d'une attaque intrusive, l'exécution d'un effacement seul $D_2$ en mémoire non volatile d'une variable factice, laquelle est notée VF. Cette variable factice peut consister en n'importe quelle variable stockée en mémoire non volatile et distincte de la variable d'état de fin de vie $FdV_E$ du dispositif électronique. Ceci permet de masquer encore davantage tout effacement éventuel de la variable d'état de fin de vie du dispositif électronique en mémoire non volatile. En effet, un tiers indélicat n'est pas facilement capable de distinguer l'effacement de la variable d'état de fin de vie et l'effacement d'une variable fictive, ces deux types d'effacement ayant des signatures électriques proches, voire identiques.

De préférence, l'effacement seul de la variable factice VF est exécuté dans la même page mémoire que celui de la variable d'état de fin de vie.

À l'étape $D_2$ représentée en figure 1c, l'opération d'effacement dans la même page mémoire est représentée par la relation :

$$WAP(VF) = WAP(FdVE).$$

Dans la relation précédente, WAP désigne l'adresse de la page mémoire d'effacement.

L'étape $D_2$ est suivie de l'appel de l'étape E de la figure 1a.

En outre, ainsi que représenté sur la même figure 1c, l'effacement seul en mémoire non volatile de la variable factice est exécuté préalablement à toute opération de transmission de données sur la ligne du port d'entrée/sortie du dispositif électronique. Sur la figure 1c, l'opération correspondante est représentée de manière symbolique par la détection de toute opération d'entrée/sortie par la relation :

$$COM = I/O ?$$

La détection d'une telle opération provoque alors l'effacement systématique et immédiat de la variable factice, ainsi que décrit précédemment dans la description.

Enfin, ainsi que représenté en figure 1d, le procédé inclut avantageusement, consécutivement à tout effacement seul en mémoire non volatile de la variable d'état de fin de vie $FdV_E$ tel que représenté à l'étape G1, une étape notée G2 consistant à vérifier à la valeur vide telle que définie plus haut, la valeur de la variable d'état de fin de vie $FdV_R$ mémorisée en mémoire vive. L'opération correspondante à l'étape précitée est notée selon la relation :

$$FdV_R = \emptyset.$$

Sur vérification à la valeur vide de la variable d'état de fin de vie $FdV_R$, une étape d'exécution des opérations de passage en fin de vie du dispositif électronique est effectuée par appel de l'étape C représentée en figure 1a.

Au contraire, en l'absence de vérification à la valeur vide de la variable d'état de fin de vie $FdV_R$, un retour à l'étape H est effectué.

En outre, ainsi qu'on l'a également représenté en figure le, sur vérification à l'étape $D_{21}$ de la valeur de la variable d'état de fin de vie $FdV_R$ à la valeur vide, soit sur réponse positive au test $D_{21}$ précité, à l'opération d'effacement seul en mémoire non volatile de la variable factice VF, représentée à l'étape $D_{22}$ de la figure le, est substituée l'effacement seul en mémoire EEPROM de la valeur de la variable d'état de fin de vie $FdV_E$ par appel de l'étape G de la figure 1a.

Le procédé permet en outre avantageusement la mise en oeuvre d'un compteur d'erreur.

D'une manière générale, la mise à jour d'un compteur d'erreur est soumise à la même restriction que la mise à jour d'une variable de fin de vie.

En raison du fait qu'il s'agit d'une écriture en mémoire non volatile, de type EEPROM, une telle écriture est normalement détectable en raison de la surintensité consommée par cette dernière au cours de l'opération d'écriture.

Le procédé peut donc permettre de manière avantageuse, dans le cas de détection d'erreurs ne justifiant pas un passage direct en fin de vie, l'implémentation d'un compteur avant d'effectuer l'effacement normal. La valeur de ce compteur est ensuite régulièrement vérifiée et le dépassement d'une valeur de seuil permet de déclencher alors un passage en fin de vie.

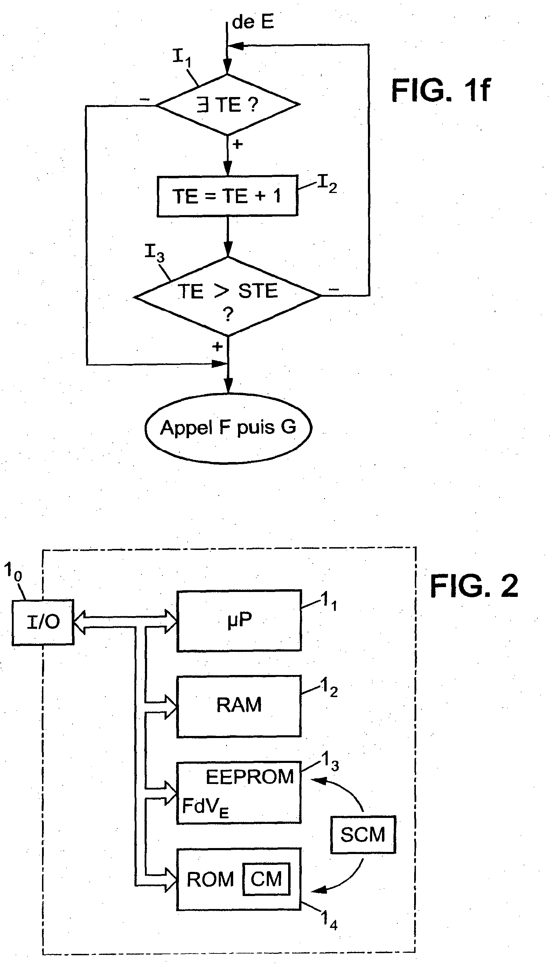

Un tel mode opératoire est représenté en figure 1f, de la manière suivante :

sur détection $I_1$ d'une erreur d'exécution temporaire d'une instruction, distincte d'une attaque intrusive et ne justifiant pas d'un passage en fin de vie du dispositif électronique, la détection de l'erreur temporaire étant désignée 3 TE ?, où TE désigne l'erreur d'exécution temporaire précitée, la réponse positive au test $I_1$ appelle une étape $I_2$ de mise à jour par implémentation d'un compteur d'erreur en mémoire vive. La valeur mise à jour à l'étape $I_2$ représentée par la relation :

```
TE = TE + 1 est alors suivie d'une étape de comparaison
```

est alors suivie d'une étape de comparaison $I_3$ de la valeur de comptage des valeurs mises à jour à une valeur de seuil, notée STE.

À l'étape de test $I_3$ l'opération de comparaison est notée:

```
TE > STE ?
```

Sur dépassement de la valeur de seuil par la valeur de comptage d'erreur actualisée, c'est-à-dire sur réponse positive au test $I_3$, l'écriture dans la mémoire vive de la valeur de la variable d'état de fin de vie du dispositif électronique et le passage en fin de vie sont effectués par appel de l'étape F puis G, ainsi que représenté en figure 1f.

Un dispositif électronique comportant un microprocesseur noté $1_1$, une mémoire vive notée $1_2$, une mémoire non volatile de type EEPROM par exemple, notée $1_3$, et une mémoire morte notée $1_4$ est maintenant décrit en liaison avec la figure 2. En outre, ainsi que représenté sur la figure précitée, le dispositif comprend un port d'entrée sortie noté I/O.

Ainsi qu'on l'a représenté sur la figure 2, le dispositif électronique en fonctionnement comporte une variable d'état de fin de vie de ce dispositif électronique, notée $FdV_E$, gérée par un module de contrôle CM lequel peut par exemple être un module logiciel implanté en mémoire morte $1_4$.

Le module de contrôle CM inclut un module de programmes d'ordinateur SCM permettant l'exécution des étapes du procédé de masquage de passage en fin de vie d'un dispositif électronique, ainsi que précédemment décrits en liaison avec les figures 1a à 1f.

Bien entendu, le module de programme d'ordinateur SCM peut être implanté en mémoire non volatile de type EEPROM, laquelle constitue un support de mémorisation. Ce module de programme d'ordinateur inclut une suite d'instructions exécutables par le microprocesseur du dispositif électronique et, lors de l'exécution des instructions précitées, exécute les étapes de mise en oeuvre du procédé, tel que décrit précédemment en liaison avec tout ou partie des figures 1a à 1f.

Le procédé de masquage de passage en fin de vie d'un dispositif électronique, objet de l'invention, a été mis en oeuvre sur des cartes électroniques. Des tests très poussés exécutés sur ces cartes électroniques par des entités de confiance indépendantes n'ont pas permis d'empêcher le passage en fin de vie de ces cartes électroniques, contrairement aux cartes électroniques munies de processus de passage en fin de vie classique, pour lesquelles il est possible de répéter des attaques intrusives jusqu'à la mise en évidence d'une faille exploitable. En conséquence, il apparaît que le procédé objet de l'invention ne permet plus de différencier à temps le cas où une attaque a été détectée et va donc entraîner un passage en fin de vie du dispositif électronique du cas où l'attaque n'a pas été détectée ou n'a produit aucun effet.

**Revendications**

1. Procédé de masquage de passage en fin de vie d'un dispositif électronique comprenant un microprocesseur, une mémoire vive, une mémoire morte, une mémoire non volatile reprogrammable contenant une variable d'état de fin de vie du dispositif électronique gérée par un module de contrôle et un port d'entrée/sortie, ledit procédé comprenant les étapes suivantes:

   - charger (A) en mémoire vive, à partir de ladite mémoire non volatile, la valeur ($FdV_E$) de ladite variable d'état de fin de vie ; et, préalablement à l'exécution de toute commande courante par ledit microprocesseur;
   - vérifier (B) la valeur de ladite variable d'état de fin de vie mémorisée en mémoire vive ($FdV_R$) ; et, en cas de valeur vide: exécuter (C) les opérations de passage en fin de vie du dispositif électronique ; sinon, ladite variable d'état de fin de vie mémorisée en mémoire vive ($FdV_R$) ayant une valeur non vide;
   - poursuivre (D) l'initialisation et/ou l'exécution de la commande courante (COM) par le microprocesseur du dispositif électronique ; et, sur détection (E) d'une attaque intrusive ;
   - procéder à une écriture (F), dans la seule mémoire vive, de ladite variable d'état de fin de vie du dispositif électronique ($FdV_R$) et poursuivre l'initialisation et/ou l'exécution de la commande courante ;

   **caractérisé en ce que** le procédé comprend l'étape suivante:

   - procéder (G) à un effacement seul de la variable d'état de fin de vie ($FdV_E$) dans ladite mémoire non volatile de manière différée pour l'effectuer en lieu et place d'une prochaine opération de mise à jour en mémoire non volatile.

2. Procédé selon la revendication 1, dans lequel pour un ensemble de commandes exécutées par le microprocesseur du dispositif électronique ($COM \in \{COM_W, COM_{\overline{W}}\}$) incluant des commandes ($COM_W$) comprenant une opération systématique en mémoire non volatile et des commandes ($COM_{\overline{W}}$) ne comprenant pas d'opération en mémoire non volatile, ledit procédé comprend en outre, indépendamment de la détection ou de la non détection d'une attaque intrusive, l'exécution d'un effacement seul en mémoire non volatile d'une variable factice, distincte de la variable d'état de fin de vie du dispositif électronique.

3. Procédé selon la revendication 2, dans lequel l'effacement seul de la variable factice est exécuté dans une même page mémoire que celui de ladite variable d'état de fin de vie.

4. Procédé selon l'une des revendications 2 ou 3, dans lequel l'effacement seul en mémoire non volatile de la variable factice est exécuté préalablement à toute exécution d'opération de transmission de données sur la ligne du port d'entrée/sortie du dispositif électronique à microprocesseur.

5. Procédé selon la revendication 4, dans lequel, sur vérification de la valeur de ladite variable d'état de fin de vie ($FdV_R$) à la valeur vide, audit effacement seul en mémoire non volatile de la variable factice est substitué un effacement seul en mémoire non volatile de la valeur de la variable d'état de fin de vie ($FdV_E$) :

6. Procédé selon l'une des revendications 2 à 5, incluant en outre, consécutivement à tout effacement seul en mémoire non volatile de la variable d'état de fin de vie ($FdV_E$), une étape consistant à vérifier à la valeur vide, la valeur de ladite variable d'état de fin de vie, mémorisée en mémoire vive (FdVr), et, sur vérification à la valeur vide, une étape d'exécution des opérations de passage en fin de vie du dispositif électronique.

7. Procédé selon l'une des revendications précédentes, dans lequel, sur détection d'une erreur d'exécution temporaire d'une instruction distincte d'une attaque intrusive ne justifiant pas d'un passage en fin de vie du dispositif électronique, ledit procédé inclut en outre :,
   la mise à jour par incrémentation d'un compteur d'erreur en mémoire vive ;
   la comparaison de la valeur de comptage d'erreur à une valeur de seuil ; et, sur dépassement de ladite valeur de seuil par ladite valeur de comptage d'erreur :

   l'écriture dans la mémoire vive de la valeur de ladite variable d'état de fin de vie du dispositif électronique et le passage en fin de vie du dispositif électronique.

8. Dispositif électronique comprenant un microprocesseur, une mémoire vive, une mémoire morte, une mémoire non volatile reprogrammable, contenant une variable d'état de fin de vie du dispositif électronique ($FdV_E$) gérée par un module de contrôle et un port d'entrée sortie, dans lequel ledit module de contrôle inclut un module de programme d'ordinateur (SCM) d'exécution des étapes du procédé selon l'une des revendications 1 à 7 ;

**9.** Produit de programme d'ordinateur mémorisé sur un support de mémorisation et incluant une suite d'instructions exécutables par un ordinateur ou par le microprocesseur d'un dispositif électronique, dans lequel, lors de l'exécution desdites instructions, ledit programme exécute les étapes du procédé selon l'une des revendications 1 à 7.

**Patentansprüche**

**1.** Verfahren zur Verdeckung des Übergangs zum End-of-Life einer elektronischen Vorrichtung, die einen Mikroprozessor, einen Arbeitsspeicher, einen Festspeicher, einen umprogrammierbaren, nicht-flüchtigen Speicher aufweist, der eine von einem Steuermodul verwaltete End-of-Life-Zustandsvariable der elektronischen Vorrichtung und einen Eingangs-/Ausgangsport enthält, wobei das Verfahren die folgenden Schritte aufweist:

- Laden (A) des Werts ($FdV_E$) der End-of-Life-Zustandsvariablen ausgehend vom nicht-flüchtigen Speicher in den Arbeitsspeicher; und vor der Ausführung jedes laufenden Befehls durch den Mikroprozessor;
- Prüfen (B) des Werts der im Arbeitsspeicher ($FdV_R$) gespeicherten End-of-Life-Zustandsvariablen; und im Fall eines leeren Werts: Ausführen (C) der Vorgänge des Übergangs zum End-of-Life der elektronischen Vorrichtung; sonst, wenn die im Arbeitsspeicher ($FdV_R$) gespeicherte End-of-Life-Zustandsvariable einen nicht leeren Wert hat;
- Fortsetzen (D) der Initialisierung und/oder der Ausführung des laufenden Befehls (COM) durch den Mikroprozessor der elektronischen Vorrichtung; und bei Erfassung (E) eines Angriffs von außen;
- Durchführen eines Schreibvorgangs (F), nur in den Arbeitsspeicher, der End-of-Life-Zustandsvariablen der elektronischen Vorrichtung ($FdV_R$) und Fortsetzen der Initialisierung und/oder der Ausführung des laufenden Befehls;

**dadurch gekennzeichnet, dass** das Verfahren den folgenden Schritt enthält:

- Durchführen (G) eines zeitversetzten Löschens nur der End-of-Life-Zustandsvariablen ($FdV_E$) im nicht-flüchtigen Speicher, um es anstelle eines folgenden Vorgangs der Aktualisierung im nichtflüchtiger Speicher auszuführen.

**2.** Verfahren nach Anspruch 1, wobei für eine Gruppe von vom Mikroprozessor der elektronischen Vorrichtung (COM $\in$ {$COM_W$, $COM_{\overline{W}}$}) ausgeführten Befehlen, einschließlich Befehlen ($COM_W$), die einen systematischen Vorgang im nicht-flüchtigen Speicher enthalten, und Befehlen ($COM_{\overline{W}}$), die keinen Vorgang im nicht-flüchtigen Speicher enthalten, das Verfahren außerdem unabhängig von der Erfassung oder der Nichterfassung eines Angriffs von außen die Ausführung eines Löschens nur im nicht-flüchtigen Speicher einer Scheinvariablen enthält, die sich von der End-of-Life-Zustandsvariablen der elektronischen Vorrichtung unterscheidet.

**3.** Verfahren nach Anspruch 2, wobei das Löschen nur der Scheinvariablen auf der gleichen Speicherseite wie die der End-of-Life-Zustandsvariablen ausgeführt wird.

**4.** Verfahren nach einem der Ansprüche 2 oder 3, wobei das Löschen nur im nicht-flüchtigen Speicher der Scheinvariablen vor jeder Ausführung eines Datenübertragungsvorgangs auf der Leitung des Eingangs-/Ausgangsports der elektronischen Vorrichtung mit Mikroprozessor ausgeführt wird.

**5.** Verfahren nach Anspruch 4, wobei nach Prüfung des Werts der End-of-Life-Zustandsvariablen ($FdV_R$) auf den leeren Wert das Löschen nur im nicht-flüchtigen Speicher der Scheinvariablen durch ein Löschen nur im nicht-flüchtigen Speicher des Werts der End-of-Life-Zustandsvariablen ($FdV_E$) ersetzt wird.

**6.** Verfahren nach einem der Ansprüche 2 bis 5, das außerdem nach jedem Löschen nur im nichtflüchtiger Speichen der End-of-Life-Zustandsvariablen ($FdV_E$) einen Schritt, der darin besteht, den Wert der im Arbeitsspeicher gespeichertem End-of-Life-Zustandsvariablen ($FdV_R$) auf den leeren Wert zu prüfen, und bei Prüfung auf den leeren Wert einen Schritt der Ausführung der Vorgänge des End-of-Life-Übergangs der elektronischen Vorrichtung umfasst.

**7.** Verfahren nach einem der vorhergehenden Ansprüche, wobei bei Erfassung eines vorübergehenden Ausführungsfehlers einer sich von einem Angriff von außen unterscheidenden Anweisung, die keinen End-of-Life-Übergang der elektronischen Vorrichtung rechtfertigt, das Verfahren außerdem umfasst:

die Aktualisierung durch Inkrementierung eines Fehlerzählers im Arbeitsspeicher;
den Vergleich des Fehlerzählwerts mit einem Schwellenwert; und bei Überschreiten des Schwellenwerts durch den Fehlerzählwert:

das Schreiben in den Arbeitsspeicher des Werts der End-of-Life-Zustandsvariablen der elektronischen Vorrichtung und den End-of-Life-Übergang der elektronischen Vorrichtung.

**8.** Elektronische Vorrichtung, die einen Mikroprozessor, einen Arbeitsspeicher, einen Festspeicher, einen umprogrammierbaren nicht-flüchtigen Speicher enthält, der eine End-of-Life-Zustandsvariable der elektronischen Vorrichtung $(FdV_E)$, die von einem Steuermodul verwaltet wird, und einen Eingangs-/Ausgangsport enthält, wobei das Steuermodul ein Computerprogrammmodul (ScM) zur Ausführung der Schritte nach einem der Ansprüche 1 bis 7 umfasst.

**9.** Computerprogrammprodukt, das auf einem Speicherträger gespeichert ist und eine Folge von von einem Computer oder vom Mikroprozessor einer elektronischen Vorrichtung ausführbaren Anweisungen umfasst, wobei das Programm bei der Ausführung der Anweisungen die Schritte des Verfahrens nach einem der Ansprüche 1 bis 7 ausführt.

**Claims**

**1.** Method for masking the end-of-life transition of an electronic device comprising a microprocessor, a random access memory, a read-only memory, a reprogrammable non-volatile memory containing an end-of-life state variable of the electronic device, said state variable being managed by a control module, and an input-output port, said method comprising the following steps:

- loading (A) the value $(FdV_E)$ of said end-of-life state variable into random access memory, from said non-volatile memory; and, prior to the execution of any current command by said microprocessor:
- checking (B) the value of said end-of-life state variable stored in random access memory $(FdV_R)$; and in the event of an empty value: executing (C) the end-of-life transition operations for the electronic device; otherwise, said end-of-life state variable stored in random access memory $(FdV_R)$ having a non-empty value:
- continuing (D) the initialization and/or execution of the current command (COM) by the microprocessor of the electronic device; and, upon detection (E) of an intrusion attack:
- writing (F) said end-of-life state variable of the electronic device $(FdV_R)$ to the sole random access memory, and continuing the initialization and/or execution of the current command;

**characterized in that** the method comprises the following step:

- performing (G) a deletion only of the end-of-life state variable $(FdV_E)$ in said non-volatile memory, in a deferred manner so that it is carried out in place of the next update operation in non-volatile memory.

**2.** Method according to claim 1, wherein, for a set of commands executed by the microprocessor of the electronic device $(COM \in \{COM_W, COM_{\overline{W}}\})$, including commands $(COM_W)$ comprising a systematic operation in non-volatile memory and commands $(COM_{\overline{W}})$ not comprising any operations in non-volatile memory, said method additionally comprises, independently of the detection or non-detection of an intrusion attack, the execution of a deletion only in non-volatile memory of a dummy variable that is different from the end-of-life state variable of the electronic device.

**3.** Method according to claim 2, wherein the deletion only of the dummy variable is executed in a same page of memory as that of said end-of-life state variable.

**4.** Method according to either of claims 2 or 3, wherein the deletion only of the dummy variable in non-volatile memory is executed prior to any execution of a data transmission operation on the line of the input/output port of the electronic device with microprocessor.

**5.** Method according to claim 4, wherein, if the value of said end-of-life state variable $(FdV_R)$ is the empty value, a

EP 2 689 369 B1

deletion only of the value of the end-of-life state variable (FdV$_E$) in non-volatile memory is substituted for the deletion only of the dummy variable in non-volatile memory.

6. Method according to any of claims 2 to 5, additionally comprising, following any deletion only of the end-of-life state variable (FdV$_E$) in non-volatile memory, a step consisting of checking whether the value of said end-of-life state variable stored in random access memory (FdVr) is the empty value, and, in the event that it does have this empty value, a step of executing the end-of-life transition operations for the electronic device.

7. Method according to any of the above claims, wherein, upon detection of a temporary error in the execution of an instruction that is different from an intrusion attack and does not justify an end-of-life transition of the electronic device, said method additionally includes:

   updating by incrementing an error counter in random access memory;
   comparing the value of the error counter to a threshold value, and if said threshold value is exceeded by said error counter value:

      writing the value of said end-of-life state variable of the electronic device in the random access memory and executing the end-of-life transition for the electronic device.

8. Electronic device comprising a microprocessor, a random access memory, a read-only memory, a reprogrammable non-volatile memory containing an end-of-life state variable for the electronic device (FdV$_E$) , said state variable being managed by a control module, and an input/output port, wherein said control module includes a computer program module (SCM) for executing the steps of the method according to one of claims 1 to 7.

9. Computer program product stored on a storage medium and including a set of instructions executable by a computer or by the microprocessor of an electronic device, wherein, during the execution of said instructions, said program executes the steps of the method according to one of claims 1 to 7.

FIG. 1a

FDVR = Ø ?

## FIG. 1b

COM

$D_1$

COM = I/O ? +

−

Effacement VF en EEPROM
WAP (VF) = WAP (FdV$_E$)

$D_2$

D

Appel E

## FIG. 1c

de F

Effacement
effectif de FdV$_E$ — G$_1$

G$_2$

G

+    FdV$_R$ = Ø
?

Appel C

−

Retour H

## FIG. 1d

de D$_1$

D$_2$

D$_{21}$

FdV$_R$ = Ø
?

+ 

## FIG. 1e

D$_{22}$

−

Effacement effectif de VF en EEPROM
WAP (VF) = WAP (FdV$_E$)

Appel E

Appel G

de E

$I_1$

∃ TE ?

−

+

TE = TE + 1     $I_2$

$I_3$

TE > STE ?

−

+

Appel F puis G

**FIG. 1f**

**FIG. 2**

$1_0$

I/O

μP     $1_1$

RAM     $1_2$

EEPROM     $1_3$

FdV$_E$

SCM

ROM  CM

$1_4$

## RÉFÉRENCES CITÉES DANS LA DESCRIPTION

**Documents brevets cités dans la description**

- FR 0708242

- FR 2008052106 W